# DEMANDE DE BREVET EUROPEEN

(11) **EP 4 201 695 A1**
(43) Date de publication de la demande: **28.06.2023**
(21) Numéro de dépôt: 22210346.7
(22) Date de dépôt: 29.11.2022
(51) Int. Cl.: B44C 3/00, B44C 1/22, F21S 41/20, F21S 41/37, F21S 43/20, B60Q 1/00, B23K 26/362

(54) **PROCÉDÉ DE FABRICATION D'UNE PIÈCE DE VÉHICULE TRANSPARENTE OU TRANSLUCIDE**

(30) Priorité: 01.12.2021 FR 2112814
(71) Demandeur: Compagnie Plastic Omnium SE, 69007 Lyon (FR)
(72) Inventeur: CORNET, Olivier, 01150 Sainte-Julie (FR); GUILLIER, Stéphane, 01150 Sainte-Julie (FR); HUSAK, Xavier, décédé(e) (FR)
(74) Mandataire: LLR

(57) **Abrégé**

Dans ce procédé de fabrication d'une pièce de véhicule (2), on met en œuvre les étapes suivantes :
a) surmoulage d'un film semi-transparent (6) sur une pièce transparente ou translucide (4),
b1) application d'une couche de peinture (14) sur le film semi-transparent (6),
b2) application d'une couche de vernis (20) sur la couche de peinture (14), et
b3) irradiation partielle de la couche de peinture (14) et de la couche de vernis (20) avec un rayonnement laser (22) de manière à graver la couche de peinture (14) et la couche de vernis (20),
l'étape a) étant mise en œuvre avant l'étape b1) ou après l'étape b3).

## Description

L'invention concerne une pièce de véhicule automobile. Plus particulièrement, l'invention concerne un procédé de fabrication d'une pièce de véhicule transparente ou translucide et contribuant à l'aspect extérieur du véhicule et une pièce de véhicule obtenue par un tel procédé.

Un véhicule comprend plusieurs pièces transparentes ou translucides destinées à transmettre de la lumière. Il s'agit notamment des pièces utilisées à des fins d'éclairage réglementaire, par exemple celles protégeant les blocs optiques des feux de route et de croisement ou bien des feux clignotants. Par ailleurs, le véhicule peut également présenter des sources de lumière prévues à des fins décoratives qui améliorent l'esthétique du véhicule.

A ces fins, il est possible de traiter une surface externe des pièces transparentes ou translucides afin d'améliorer leur aspect. Une possibilité pour ce faire consiste à surmouler un film ou masque opaque sur la surface externe de la pièce, le film opaque présentant un motif prédéfini permettant le passage de la lumière. De la sorte, lorsque la source de lumière associée à la pièce émet de la lumière, cette dernière est partiellement bloquée par l'opacité du film opaque et partiellement transmise par les parties de la pièce qui sont en regard du motif. Cela permet d'améliorer l'esthétique du faisceau lumineux transmis, par la pièce transparente ou translucide, de la source de lumière vers l'environnement extérieur. Une autre possibilité consiste à décorer la pièce par peinture et marouflage ou par peinture et gravure laser, ce qui permet d'obtenir un résultat similaire.

Ces options sont intéressantes mais présentent certains inconvénients. En effet, un film opaque tel que décrit ci-dessus peut poser des problèmes de correspondance de couleur avec la peinture du véhicule, ce qui a un impact négatif sur l'esthétique du véhicule. De plus, l'application du film opaque selon l'une des manières présentées ci-dessus peut ne pas permettre d'obtenir un motif d'une précision aussi élevée que souhaitée.

Un autre problème se manifestant avec le film opaque de l'art antérieur réside dans le passage de lumière à travers les parties de la pièce transparente ou translucide qui ne sont pas recouvertes par le motif. En effet, la lumière est transmise librement à travers ces parties, si bien que les éléments se trouvant derrière la pièce sont visibles de l'extérieur si la source de lumière associée à la pièce est éteinte. Il s'agit principalement de la source de lumière et possiblement d'éléments de câblage. La mise à vue de ces éléments n'est pas souhaitée dans la mesure où elle nuit à l'esthétique générale du véhicule, si bien qu'il est préférable de l'éviter. Et dans certains cas en fonction du cahier des charges en matière d'esthétique, il peut aussi être préférable d'éviter la mise à vue de la pièce transparente ou translucide elle-même.

L'invention a notamment pour but de remédier à ces problèmes en proposant un procédé ne posant pas de problème de correspondance de couleur avec la peinture du véhicule, qui soit plus précis que celui de l'art antérieur et qui permette de dissimuler les éléments se trouvant derrière la pièce transparente ou translucide.

A cet effet, on prévoit selon l'invention un procédé de fabrication d'une pièce de véhicule qui comprend les étapes suivantes :
a) surmoulage d'un film semi-transparent sur une pièce transparente ou translucide,
b1) application d'une couche de peinture sur le film semi-transparent,
b2) application d'une couche de vernis sur la couche de peinture, et
b3) irradiation partielle de la couche de peinture et de la couche de vernis avec un rayonnement laser de manière à graver la couche de peinture et la couche de vernis,
l'étape a) étant mise en œuvre avant l'étape b1) ou après l'étape b3).

On peut ainsi appliquer la peinture sur toute la surface de la pièce transparente ou translucide puis la retirer par gravure à l'aide du rayonnement laser selon un motif prédéfini choisi. On comprend que le laser permet de retirer la peinture afin d'obtenir un rendu plus précis qu'en mettant en œuvre l'un des procédés de l'art antérieur. De plus, le fait que la couleur du revêtement soit donnée par de la peinture et non par un film comme dans l'art antérieur rend possible de choisir une peinture qui corresponde à celle utilisée pour la carrosserie du véhicule. Il s'ensuit qu'aucun problème de correspondance de couleur, ou d'harmonie de teinte, ne se pose.

Le film semi-transparent permet d'empêcher de voir à travers la pièce transparente ou translucide lorsque la source de lumière est éteinte, sans pour autant empêcher la transmission de la lumière émise par la source de lumière lorsqu'elle est allumée. On comprend ainsi qu'on évite que les éléments se trouvant derrière la pièce transparente ou translucide aient un impact sur l'esthétique du véhicule puisqu'ils sont occultés par le film semi-transparent.

Le surmoulage du film semi-transparent renforce également la résistance au choc de la pièce de véhicule en agissant comme un vitrage feuilleté de sécurité. Cela est particulièrement avantageux dans le cas où la pièce de véhicule forme des panneaux de carrosserie, tels que des pare-chocs.

Par « couche de peinture », on entend que ladite couche peut notamment comporter un primaire et une base colorée, un primaire et une laque colorée ou encore une laque colorée seule.

Avantageusement, on met en œuvre l'étape suivante avant l'étape b1) :
b0) application d'une couche de protection, comprenant par exemple un vernis, sur le film semi-transparent, sous la couche de peinture.

L'agencement des différentes couches et l'ordre dans lequel on les applique permet par ailleurs de s'affranchir des difficultés techniques suivantes :
- dans le cas où elle est réalisée en polycarbonate, la pièce transparente est impossible à traiter pour la protéger des rayonnements ultraviolets, ce qui rend la présence d'au moins une couche de vernis nécessaire.
- il est très difficile de faire adhérer une couche de vernis directement sur une autre couche de vernis.

Avantageusement, on fabrique la pièce transparente ou translucide par moulage d'un plastique, par exemple du polycarbonate, du polypropylène, du polytéréphtalate d'éthylène ou du poly(méthacrylate de méthyle).

La pièce transparente ou translucide est ainsi simple à réaliser et peu onéreuse.

Avantageusement, le rayonnement laser présente une longueur d'onde comprise dans l'infrarouge, de préférence dans l'infrarouge proche, ou dans l'ultraviolet.

Un tel rayonnement laser permet d'efficacement éliminer la couche de peinture et la couche de vernis.

Avantageusement, la couche de vernis et la couche de protection sont réalisées dans un matériau absorbant ou réfléchissant des rayonnements ultraviolets.

En d'autres termes, la couche de vernis et la couche de protection ne permettent pas la transmission des rayonnements ultraviolets. On protège ainsi la pièce transparente ou translucide des rayonnements ultraviolets qui pourraient la détériorer par photodégradation car toute sa surface extérieure est revêtue de la couche de protection et, dans une partie, de la couche de vernis.

Avantageusement, la couche de peinture comporte une sous-couche de primaire.

La sous-couche de primaire permet d'opacifier la couche de peinture et ainsi d'améliorer son aspect. Sans sous-couche de primaire, il serait nécessaire d'augmenter l'épaisseur de la couche de peinture pour obtenir un rendu similaire, ce qu'il est préférable d'éviter pour des raisons d'aspect (coulure, teinte), de coûts et d'adhérence de la couche de peinture à la pièce transparente ou translucide. De plus, cela permet d'améliorer l'accroche de la peinture à la pièce transparente ou translucide tout en permettant d'avoir une couche de vernis dans les zones sans peinture.

Avantageusement, après l'étape d'irradiation, on lustre la pièce de véhicule.

On améliore ainsi la transparence de la pièce de véhicule en limitant les effets de bord des zones irradiées. Spécifiquement, on atténue la forme en escalier des couches qui revêtent la pièce transparente ou translucide, ce qui contribue à rendre plus homogène son aspect de surface.

Avantageusement, le film semi-transparent présente un effet visuel choisi parmi la liste suivante : aspect chromé, métallisé, brillant, mat, satiné, brossé ou cuivré, effet miroir..

On donne ainsi au film semi-transparent un effet lumineux esthétique lorsqu'il est éclairé par la source de lumière, et permet d'efficacement dissimuler les éléments derrière la pièce transparente ou translucide lorsque la source de lumière est éteinte.

Avantageusement, le film semi-transparent comprend un empilement de couches réalisées en polytéréphtalate d'éthylène.

Ce type de structure permet au film semi-transparent de présenter un aspect chromé avec des moyens simples et peu onéreux.

Avantageusement, le film semi-transparent présente une épaisseur comprise entre 100µm et 1 mm.

Cette gamme d'épaisseur fournit un bon compromis entre la transmission de la lumière émise par la source de lumière, la dissimulation des éléments derrière la pièce transparente ou translucide lorsque la source de lumière est éteinte, la tenue mécanique du film et son coût de fabrication.

Avantageusement, la pièce transparente ou translucide présente au moins une forme en relief principale sous le film semi-transparent.

On permet ainsi de créer un effet lumineux particulier grâce à la diffusion de la lumière dans la forme en relief principale. Cet effet lumineux est en outre amplifié par la présence du film semi-transparent.

De préférence, on effectue l'irradiation laser de l'étape b3) au moins en regard de l'au moins une forme en relief principale.

De la sorte, le motif créé dans la couche de peinture par irradiation laser coïncide avec la zone de la pièce transparente ou translucide comprenant l'au moins une forme en relief principale. Cela permet par ailleurs d'éviter d'obtenir un effet dit « autocollant » ou « sticker » selon lequel la différence de niveau entre les zones du motif et les zones en dehors du motif peut être sentie en faisant glisser un doigt ou un ongle, ce qui procure un certain effet plutôt désagréable et connote une moindre qualité de la pièce de véhicule.

De préférence, la pièce transparente ou translucide comprend une première face sur laquelle est surmoulée le film semi-transparent et présentant l'au moins une forme en relief, et une deuxième face opposée à la première face, la deuxième face présentant au moins une forme en relief secondaire opposée à la forme en relief principale et de convexité opposée.

On augmente ainsi le champ d'application des effets lumineux qui peuvent être générés par les formes en relief en combinaison avec le film semi-transparent, ce qui permet d'améliorer grandement l'esthétique de la pièce de véhicule. En outre, la pièce transparente ou translucide présente ainsi une épaisseur uniforme, ce qui permet d'améliorer la qualité de l'étape de moulage de la pièce en évitant la formation de défauts d'aspect.

On prévoit également selon l'invention une pièce de véhicule obtenue par la mise en œuvre d'un procédé de fabrication tel que défini dans ce qui précède.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en section d'une première étape de la mise en œuvre d'un procédé de fabrication d'une pièce de véhicule selon un premier mode de réalisation de l'invention,
[Fig. 2] la figure 2 est une vue en section d'une deuxième étape de la mise en œuvre d'un procédé de fabrication de la pièce de véhicule selon le premier mode de réalisation de l'invention,
[Fig. 3] la figure 3 est une vue en section d'une pièce de véhicule issue de la mise en œuvre d'un procédé de fabrication selon un deuxième mode de réalisation de l'invention,
[Fig. 4] la figure 4 est une vue en section d'une pièce de véhicule issue de la mise en œuvre d'un procédé de fabrication selon une variante du deuxième mode de réalisation de l'invention,
[Fig. 5] la figure 5 est une vue en section d'une pièce de véhicule issue de la mise en œuvre d'un procédé de fabrication selon un troisième mode de réalisation de l'invention,
[Fig. 6] la figure 6 est une vue en perspective de la pièce de véhicule de la figure 5, et
[Fig. 7] la figure 7 est une vue en section d'une pièce de véhicule issue de la mise en œuvre d'un procédé de fabrication selon une variante du troisième mode de réalisation de l'invention.

### Description détaillée

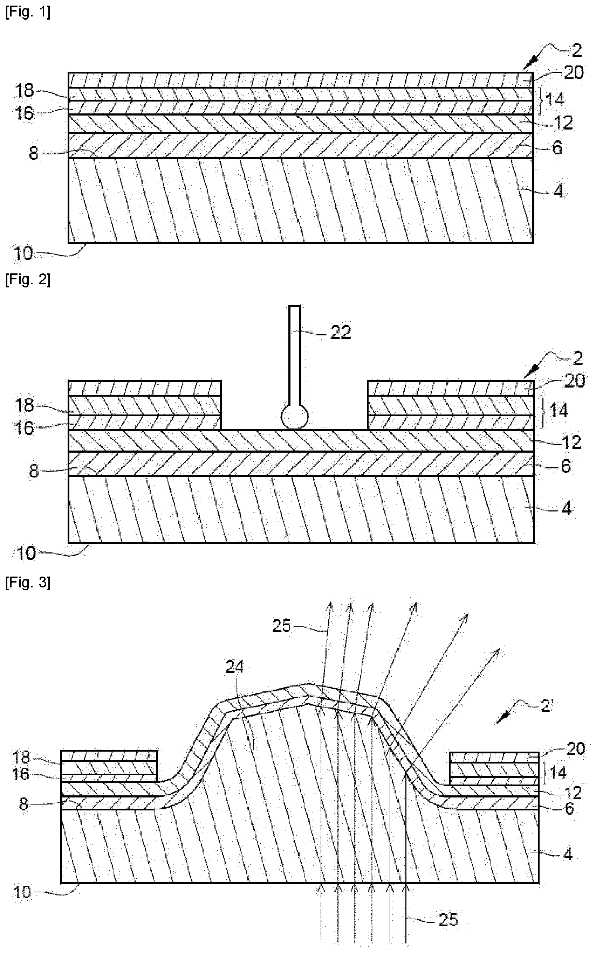

On a représenté sur la figure 1 une première étape d'un procédé de fabrication d'une pièce de véhicule 2 selon un premier mode de réalisation de l'invention.

La pièce de véhicule 2 comprend une pièce transparente ou translucide 4 destinée à protéger une source de lumière (non représentée). On entend par « transparente », respectivement « translucide », qu'elle est au moins transparente, respectivement translucide, à tout rayonnement lumineux présentant une longueur d'onde comprise dans le spectre visible, c'est-à-dire comprise entre environ 380 et 780 nm. La pièce 4 est ici transparente et réalisée dans un plastique présentant cette caractéristique, en l'occurrence du polycarbonate communément désigné « PC ». On peut toutefois prévoir de réaliser la pièce dans un tout autre plastique, par exemple le polypropylène (PP) (translucide), du polytéréphtalate d'éthylène (PET) (translucide) ou le poly(méthacrylate de méthyle) (PMMA) (transparent). La pièce transparente ou translucide 4 est réalisée par moulage. Un tel procédé étant connu, on ne le détaillera pas davantage dans ce qui suit.

La pièce de véhicule 2 comprend un film semi-transparent 6 qui est surmoulé sur une première face 8 de la pièce transparente 4. La première face 8 forme la surface externe de la pièce transparente 4. Par « surface externe », on entend une surface de la pièce transparente 4 qui n'est pas située en regard de la source de lumière et qui est destinée à être exposée à l'environnement extérieur une fois le véhicule fabriqué. La pièce transparente 4 présente en outre une seconde face 10, formant la surface interne de la pièce transparente 4, opposée à la première face 8. En d'autres termes, la lumière émise par la source de lumière rencontre d'abord la seconde face 10 puis la première face 8 avant d'entrer dans l'environnement extérieur.

Le film semi-transparent 6 est défini en tant que tel en ce qu'il permet la transmission de la lumière émise par la source de lumière, avec une éventuelle absorption partielle de cette lumière, mais empêche la transmission de la lumière naturelle. Ici, le film semi-transparent 6 comprend un empilement de couches réalisées en polytéréphtalate d'éthylène (PET) de sorte que le film semi-transparent 6 présente une épaisseur comprise entre 100 µm et 1 mm. Cet empilement de couches permet de conférer au film semi-transparent 6 un aspect chromé, mais on peut prévoir de remplacer l'empilement de couches réalisées en polytéréphtalate d'éthylène par un tout autre empilement pour conférer un autre aspect au film semi-transparent. Par exemple, on peut choisir la constitution du film semi-transparent de sorte qu'il présente un effet visuel choisi parmi la liste suivante : aspect chromé, métallisé, brillant, mat, satiné, brossé ou cuivré, effet miroir. Le film semi-transparent 6 présente une forme simple, exempte d'ouvertures, recouvrant l'intégralité de la première face 8 ou à tout le moins une partie de celle-ci. On verra dans la suite en quoi ces propriétés du film semi-transparent 6 sont intéressantes dans le cadre de l'invention.

La pièce de véhicule 2 comprend ici une couche de protection 12 qui est déposée sur le film semi-transparent 6. La couche de protection 12 comprend ici un vernis et permet de protéger la pièce transparente 4 de tout rayonnement ultraviolet auquel elle peut être exposée, notamment du soleil. En outre, la couche de protection 12 permet de protéger mécaniquement la pièce transparente 4, notamment pour éviter qu'elle soit rayée ou déformée par des sollicitations extérieures. Dans l'absolu, la présence de la couche de protection 12 est optionnelle. La couche de protection 12 est transparente à tout rayonnement lumineux présentant une longueur d'onde comprise dans le spectre visible, de manière à ne pas empêcher la transmission de la lumière émise par la source de lumière à travers la pièce de véhicule 2.

La pièce de véhicule 2 comprend une couche de peinture 14 qui est déposée au-dessus de la couche de protection 12. Ici, la couche de peinture 14 comporte une sous-couche de primaire 16 sur laquelle est déposée une couche de base 18. La couche de base 18 permet de colorer l'aspect extérieur de la pièce de véhicule 2. La sous-couche de primaire 16 permet d'améliorer l'opacité de la couche de peinture 14 et d'améliorer l'adhérence de la couche de base 18 à la pièce transparente 4.

La pièce de véhicule 2 comprend une couche de vernis 20 qui est déposée au-dessus de la couche de peinture 14. La couche de vernis 20 permet de protéger la pièce transparente 4 et la couche de peinture 14 de tout rayonnement ultraviolet auquel elles peuvent être exposées. Ici, la couche de protection 12 et la couche de vernis 20 sont réalisées dans le même matériau, mais on peut prévoir d'utiliser deux vernis différents pour réaliser les deux couches 12, 20.

Pour déposer le film semi-transparent 6 et les différentes couches sur la pièce transparente 4, on met en œuvre les étapes suivantes représentées sur la figure 1 :
a) surmoulage du film semi-transparent 6 sur la pièce transparente 4,
b0) application de la couche de protection 12 sur le film semi-transparent 6,
b1) application de la couche de peinture 14 sur la couche de protection 12, et
b2) application de la couche de vernis 20 sur la couche de peinture 14.

Parmi les étapes listées ci-dessus, les étapes b0), b1) et b2) sont réalisées successivement. L'étape a) est quant à elle réalisée indépendamment de la mise en œuvre préalable des étapes b0), b1) et b2). On peut ainsi prévoir de mettre en œuvre l'étape a) de surmoulage du film semi-transparent 6, nu, sur la pièce transparente 4 puis d'appliquer les couches selon les étapes b0), b1) et b2) sur le film semi-transparent 6 surmoulé. On peut également prévoir d'appliquer les couches selon les étapes b0), b1) et b2) sur le film semi-transparent 6 puis de surmouler l'ensemble sur la pièce transparente 4 selon l'étape a).

On a représenté en figure 2 une étape suivante du procédé de fabrication de la pièce de véhicule 2. Dans cette étape b3), on irradie une partie de la pièce de véhicule 2 à l'aide d'un rayonnement laser 22 de manière à graver la couche de peinture 14 et la couche de vernis 20. Cette gravure est effectuée dans toute l'épaisseur de la couche de peinture 14 et de la couche de vernis 20. Cette opération est communément désignée par les termes anglo-saxons « laser-etching » pouvant être traduits par « gravure au laser ». Le rayonnement laser 22 présente une longueur d'onde comprise dans l'infrarouge, c'est-à-dire comprise entre 700 nm et 20000 nm dans le cadre de l'invention. Un exemple de tel rayonnement laser est celui communément désigné « laser CO₂ » qui présente une longueur d'onde de 10600 nm. De préférence, la longueur d'onde du rayonnement laser 22 est comprise dans l'infrarouge proche, c'est-à-dire comprise entre 700 et 2000 nm. Dans ce cas et si la couche de protection 12 et la couche de vernis 20 sont transparentes au rayonnement laser 22, ce dernier présente l'avantage de ne pas graver lesdites couches. On évite ainsi un risque d'endommagement desdites couches, notamment de la couche de protection. Alternativement, on peut prévoir que le rayonnement laser présente une longueur d'onde dans l'ultraviolet.

L'irradiation est réalisée uniquement dans une partie de la pièce de véhicule 2 dans le sens où elle est réalisée selon un motif prédéfini de la surface externe de la couche de vernis 20. Elle est commandée de sorte que la couche de vernis 20 et la couche de peinture 14 soient irradiées, donc éliminées dans le motif et dans toute leur épaisseur, mais pas la couche de protection 12 qui protège la pièce transparente 4 des rayonnements ultraviolets dans les zones du motif qui ont subi la gravure, ni le film semi-transparent 6. Même si la couche de vernis 20 est réalisée dans un matériau transparent au rayonnement laser 22, l'irradiation de la couche de peinture 14 sous-jacente permet d'éliminer la couche de vernis 20 dans le motif.

Après l'irradiation, la surface de la pièce de véhicule 2 présente deux niveaux.

Dans la zone du motif prédéfini, la pièce transparente 4 est revêtue uniquement du film semi-transparent 6 et de la couche de protection 12. Dans cette zone, la lumière émise par la source de lumière peut être transmise de la source de lumière vers l'environnement extérieur, mais dans l'autre sens le film semi-transparent limite la transmission de la lumière naturelle vers la source de lumière. De la sorte, la source de lumière et ses éventuels câblages ne sont pas visibles depuis l'extérieur du véhicule lorsque la source de lumière est éteinte.

En dehors de la zone du motif prédéfini, la pièce transparente 4 est revêtue du film semi-transparent 6, de la couche de protection 12, de la couche de peinture 14 et de la couche de vernis 20. Dans cette zone, la lumière visible ne peut être transmise de l'environnement extérieur vers la pièce transparente 4, et inversement, car elle est absorbée par la couche de peinture 14. En particulier, la protection de la pièce transparente 4 aux rayonnements ultraviolets auquel elle peut être exposée est assurée par la couche de vernis 20.

Après cette étape d'irradiation, on peut prévoir une étape supplémentaire de lustrage de la pièce de véhicule 2. Elle permet d'améliorer la transparence dans la zone du motif prédéfini et, de manière plus générale, l'esthétique de la pièce de véhicule 2. En outre, ce lustrage permet d'arrondir les coins formés par la gravure effectuée lors de l'étape d'irradiation, et donc d'améliorer l'esthétique de la pièce de véhicule 2 et son aspect de surface au toucher.

Il est possible de mettre en œuvre une variante de réalisation selon laquelle on intervertit les étapes b2) et b3), de sorte que la couche de vernis n'est pas gravée par l'irradiation laser. Il est également possible de mettre en œuvre une autre variante de réalisation du procédé selon laquelle on ajoute une étape b4) intervenant après l'étape b3) consistant à appliquer une couche de vernis supplémentaire au-dessus de la couche de peinture et la couche de vernis qui ont été gravées par l'irradiation laser.

On a représenté en figure 3 une pièce de véhicule 2' obtenue par la mise en œuvre d'un procédé de fabrication selon un deuxième mode de réalisation de l'invention. On décrira dans ce qui suit uniquement les différences que présentent la pièce de véhicule 2' par rapport à celle du premier mode de réalisation. Les éléments identiques ou similaires d'un mode de réalisation à un autre portent des références numériques identiques.

La pièce de véhicule 2' comprend une pièce transparente 4 présentant sur sa première face 8 au moins une forme en relief dite principale 24 sous le film semi-transparent 6. Dans l'exemple de la figure 3, elle se présente sous la forme d'une bosse convexe arrondie, mais elle peut prendre toute forme souhaitée, et en nombre souhaité. En dehors de l'au moins une forme en relief principale 24, la première face 8 présente une forme plane ou courbée. On suppose dans ce qui suit que la pièce transparente 4 comprend plusieurs formes en relief principales 24, tout en sachant qu'elle pourrait très bien comprendre une unique forme en relief principale.

Le film semi-transparent 6, la couche de protection 12, la couche de peinture 14 et la couche de vernis 20 sont déposées et gravées de la même manière que dans le précédent mode de réalisation de l'invention, en mettant en œuvre les étapes a) et b0) à b3). De manière préférentielle, on effectue l'irradiation laser de l'étape b3) au moins en regard des formes en relief principales 24. Ainsi, le motif généré dans la couche de peinture 14 et dans la couche de vernis 20 coïncide avec les formes en relief principales 24 de la pièce transparente 4. De la sorte, la lumière émise par la source de lumière passe dans le motif à travers les formes en relief principales 24, le film semi-transparent 6 et la couche de protection 12, ce qui permet de générer une diffusion de la lumière particulièrement esthétique, notamment pour une personne ne se trouvant pas directement en face de la pièce de véhicule mais qui l'observe de côté. Cette diffusion de la lumière est illustrée sur la figure 3 par des rayons lumineux 25 émis par la source de lumière et qui sont réfractés lorsqu'ils sortent des formes en relief principales 24, créant ainsi un effet de diffusion lumineuse prismatique.

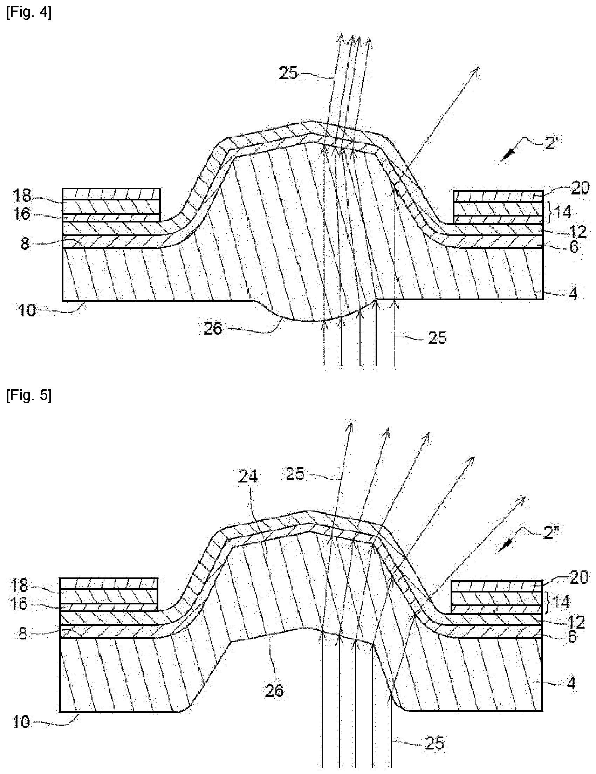

On a représenté en figure 4 une pièce de véhicule 2' selon une variante du deuxième mode réalisation illustré en figure 3. Elle en diffère en ce que la pièce transparente 4 présente sur sa deuxième face 10 au moins une forme en relief dite secondaire 26 se trouvant à l'opposé d'une forme en relief principale 24 en considérant une direction d'épaisseur de la pièce transparente 4 qui est verticale sur la figure 4. La forme en relief secondaire 26 présente une convexité similaire par rapport à la forme en relief principale 24 qui lui est opposée. Dans l'exemple de la figure 4, la pièce de véhicule 2' comprend une forme en relief principale 24 convexe et une forme en relief secondaire 26 également convexe.

L'agencement des formes en relief principale 24 et secondaire 26 permet d'obtenir une distribution lumineuse au niveau de la première face 8 de la pièce transparente 4 différente de celle obtenue avec la pièce de véhicule de la figure 3. Par la convexité des formes en relief principale 24 et secondaire 26, on obtient par la réfraction des rayons lumineux 25 au niveau de la seconde face 10 puis de la première face 8 des concentrations locales des rayons lumineux traversant la pièce 4, créant ainsi un effet esthétique certain.

On a représenté en figure 5 une pièce de véhicule 2" obtenue par la mise en œuvre d'un procédé de fabrication selon un troisième mode de réalisation de l'invention. On décrira dans ce qui suit uniquement les différences que présentent la pièce de véhicule 2" par rapport à celle de la figure 3. Les éléments identiques ou similaires d'un mode de réalisation à un autre portent des références numériques identiques.

La pièce de véhicule 2" comprend une pièce transparente 4 présentant sur sa deuxième face 10 au moins une forme en relief dite secondaire 26. Ici, la pièce transparente 4 comprend autant de formes en relief secondaires 26 qu'elle comprend de formes en relief principales 24. Chaque forme en relief secondaire 26 se trouve à l'opposé d'une forme en relief principale 24 en considérant une direction d'épaisseur de la pièce transparente qui est verticale sur la figure 4, de sorte que l'ensemble des formes en relief secondaires 26 est l'image de l'ensemble des formes en relief principales 24 par une fonction bijective. Chaque forme en relief secondaire 26 présente une convexité opposée, mais une forme et des dimensions identiques, par rapport la forme en relief principale 24 qui lui est opposée. Dans l'exemple de la figure 5, la pièce de véhicule 2" comprend une forme en relief principale 24 convexe et une forme en relief secondaire 26 concave, de forme et de dimensions identiques de sorte qu'on pourrait emboîter deux pièces véhicule 2" l'une dans l'autre. En d'autres termes, la pièce transparente 4 présente une épaisseur uniforme. Tout comme dans la figure précédente, les rayons lumineux 25 illustrent la diffusion de la lumière traversant la pièce de véhicule 2". Les rayons lumineux 25 sont ici réfractés à deux reprises et dans la même direction, à savoir lorsqu'ils traversent la forme en relief secondaire 26 puis lorsqu'ils traversent la forme en relief principale 24.

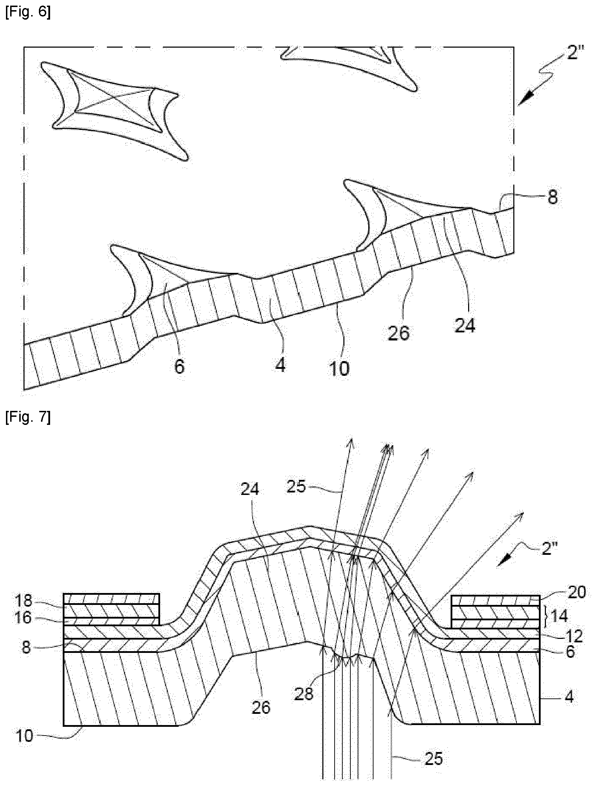

Le film semi-transparent 6, la couche de protection 12, la couche de peinture 14 et la couche de vernis 20 sont déposées et gravées de la même manière que dans les précédents modes de réalisation de l'invention, en mettant en œuvre les étapes a) et b0) à b3) et en effectuant l'irradiation laser de l'étape b3) au moins en regard des formes en relief principales. La figure 6 illustre notamment l'état de la première face 8 de la pièce de véhicule 2 une fois ces étapes réalisées.

On a représenté en figure 7 une pièce de véhicule 2" selon une variante du troisième mode réalisation illustré en figure 5. Elle en diffère en ce qu'à l'intérieur de la forme en relief secondaire 26, la seconde face 10 de la pièce transparente 4 comprend au moins un relief dit optique 28 configuré pour altérer davantage la trajectoire de certains des rayons lumineux 25 traversant la pièce transparente 4. Le relief optique 28 se présente ici sous la forme d'un relief convexe, générant une forte concentration locale des rayons lumineux sortant de la pièce de véhicule 2" par la première face 8. On peut toutefois prévoir toute forme possible pour le relief optique. A titre d'exemple, la forme du relief optique peut être telle qu'il forme un collimateur, un prisme concave ou un prisme convexe.

L'invention n'est pas limitée aux modes de réalisation présentés et d'autres modes de réalisation apparaîtront clairement à l'homme du métier.

Pour réaliser le motif, on peut remplacer la technique de gravure par irradiation laser par des techniques de masquage ou de marouflage si le degré de précision de ces techniques est satisfaisant lors de la mise en œuvre de l'invention. On peut par ailleurs prévoir d'employer un masquage ou un marouflage puis de mettre en œuvre une gravure par irradiation laser afin de rendre plus précis la réalisation du motif.

La source de lumière peut faire partie d'un bloc optique de feux de croisement et de route du véhicule, d'un bloc optique de feux clignotant du véhicule, ou bien d'un bloc optique de feux décoratifs.

Alternativement, la pièce transparente peut intégrer des guides de lumière ou des sources de lumière sans bloc optique, par moulage d'insert, surmoulage, fixation par collage, soudure, rivetage ou tout autre moyen de fixation.

### Liste de références

- 2 ; 2' ; 2" :: pièce de véhicule
- 4 :: pièce transparente ou translucide
- 6 :: film semi-transparent
- 8 :: première face
- 10 :: seconde face
- 12 :: couche de protection
- 14 :: couche de peinture
- 16 :: sous-couche de primaire
- 18 :: couche de base
- 20 :: couche de vernis
- 22 :: rayonnement laser
- 24 :: forme en relief principale
- 25 :: rayon lumineux
- 26 :: forme en relief secondaire
- 28 :: relief optique

## Revendications

1. Procédé de fabrication d'une pièce de véhicule (2 ; 2' ; 2"), **caractérisé en ce qu'**il comprend les étapes suivantes :
a) surmoulage d'un film semi-transparent (6) sur une pièce transparente ou translucide (4),
b1) application d'une couche de peinture (14) sur le film semi-transparent (6),
b2) application d'une couche de vernis (20) sur la couche de peinture (14), et
b3) irradiation partielle de la couche de peinture (14) et de la couche de vernis (20) avec un rayonnement laser (22) de manière à graver la couche de peinture (14) et la couche de vernis (20).

2. Procédé selon la revendication 1, dans lequel on met en œuvre l'étape suivante avant l'étape b1) :
b0) application d'une couche de protection (12) sur le film semi-transparent (6), sous la couche de peinture (14).

3. Procédé de fabrication d'une pièce de véhicule (2 ; 2' ; 2"), **caractérisé en ce qu'**il comprend les étapes suivantes :
b1) application d'une couche de peinture (14) sur un film semi-transparent (6),
b2) application d'une couche de vernis (20) sur la couche de peinture (14),
b3) irradiation partielle de la couche de peinture (14) et de la couche de vernis (20) avec un rayonnement laser (22) de manière à graver la couche de peinture (14) et la couche de vernis (20), et
a) surmoulage du film semi-transparent (6) sur une pièce transparente ou translucide (4).

4. Procédé selon l'une quelconque des revendications précédentes, dans lequel on fabrique la pièce transparente ou translucide (4) par moulage d'un plastique, par exemple du polycarbonate, du polypropylène, du polytéréphtalate d'éthylène ou du poly(méthacrylate de méthyle).

5. Procédé selon l'une quelconque des revendications précédentes, dans lequel le rayonnement laser (22) présente une longueur d'onde comprise dans l'infrarouge, de préférence dans l'infrarouge proche, ou dans l'ultraviolet.

6. Procédé selon l'une quelconque des revendications précédentes, dans lequel le film semi-transparent (6) présente un effet visuel choisi parmi la liste suivante : aspect chromé, métallisé, brillant, mat, satiné, brossé ou cuivré, effet miroir.

7. Procédé selon l'une quelconque des revendications précédentes, dans lequel le film semi-transparent (6) comprend un empilement de couches réalisées en polytéréphtalate d'éthylène.

8. Procédé selon l'une quelconque des revendications précédentes, dans lequel le film semi-transparent (6) présente une épaisseur comprise entre 100 µm et 1 mm.

9. Procédé selon l'une quelconque des revendications précédentes, dans lequel la pièce transparente ou translucide (4) présente au moins une forme en relief principale (24) sous le film semi-transparent (6).

10. Procédé selon la revendication précédente, dans lequel on effectue l'irradiation laser de l'étape b3) au moins en regard de l'au moins une forme en relief principale (24).

11. Procédé selon la revendication 9 ou 10, dans lequel la pièce transparente ou translucide (4) comprend une première face (8) sur laquelle est surmoulée le film semi-transparent (6) et présentant l'au moins une forme en relief (24), et une deuxième face (10) opposée à la première face (8),
la deuxième face (10) présentant au moins une forme en relief secondaire (26) opposée à la forme en relief principale (24) et de convexité opposée.

12. Pièce de véhicule (2 ; 2' ; 2") **caractérisée en ce qu'**elle est obtenue par la mise en œuvre d'un procédé de fabrication selon l'une quelconque des revendications précédentes.
